# EUROPEAN PATENT SPECIFICATION

(11) **EP 4 571 220 B1**
(45) Date of publication and mention of the grant of the patent: **04.11.2026**
(21) Application number: 23854327.6
(22) Date of filing: 10.08.2023
(51) Int. Cl.: F25D 11/00, F25D 23/02, F25D 27/00, F25D 29/00, B60N 3/10, F25D 23/10

(54) **CONTROL METHOD AND SYSTEM FOR VEHICLE-MOUNTED REFRIGERATOR , RELATED DEVICE AND VEHICLE**
STEUERUNGSVERFAHREN UND -SYSTEM FÜR EINEN FAHRZEUGMONTIERTEN KÜHLSCHRANK, ZUGEHÖRIGE VORRICHTUNG UND FAHRZEUG
PROCÉDÉ ET SYSTÈME DE COMMANDE POUR RÉFRIGÉRATEUR MONTÉ SUR VÉHICULE, DISPOSITIF ET VÉHICULE ASSOCIÉS

(30) Priority: 15.08.2022 CN 202210977431
(43) Date of publication of application: 18.06.2025
(73) Proprietor: Beijing Chehejia Automobile Technology Co., Ltd., Beijing 101300 (CN)
(72) Inventor: ZHANG, Ziwen, Beijing 101300 (CN); QIU, Peng, Beijing 101300 (CN); XU, Ziyi, Beijing 101300 (CN)
(74) Representative: Regimbeau
(86) International application number: PCT/CN2023/112314
(87) International publication number: WO 2024/037426

(56) References cited:
- CN-A- 107 709 098
- CN-A- 113 251 739
- CN-A- 114 857 818
- CN-A- 115 585 591
- CN-U- 203 752 963
- CN-U- 208 411 574
- CN-U- 210 258 153
- CN-U- 210 952 021
- CN-U- 210 952 021
- JP-A- 2017 165 198
- US-A1- 2018 111 535
- US-B2- 10 266 091

## Description

### TECHNICAL FIELD

The disclosure relates to the technical field of vehicle-mounted refrigerators, and in particular to a method and system for controlling a vehicle-mounted refrigerator, a related device, a storage medium and a vehicle.

### BACKGROUND

In the related art, a vehicle-mounted refrigerator has a single function, mainly because a control system related to the vehicle-mounted refrigerator and a control mode of the vehicle-mounted refrigerator are single. Most of vehicle-mounted refrigerators may be controlled to perform cooling only, and control systems thereof do not have capability of controlling other functions, such as visual display, heating, lighting, locking and unlocking a door body, or the like. Related art can be found from CN114857818A, US2018037150A1 and CN210952021U.

Based on this, there is required a solution which enables the vehicle-mounted refrigerator to control multiple extended functions.

### SUMMARY

In view of this, the purpose of the disclosure is to propose a method and system for controlling a vehicle-mounted refrigerator, a related device, a storage medium and a vehicle.

The invention is set out in the appended set of claims.

It may be seen from the above descriptions that according to the method and system for controlling a vehicle-mounted refrigerator, the related device, and the vehicle provided in the disclosure, the main control board is enabled to control the door body, lighting and temperature based on the door body operation instruction, the lighting operation instruction and the temperature operation instruction sent by the display panel, which comprehensively considers the control logic of the main control board after multiple different functions are added: the main control board may control the door body based on the door body operation instruction, the main control board may control the illumination lamp based on the lighting operation instruction, the main control board may control the refrigerator body and the compressor based on the temperature operation instruction. It may be seen that according to the method, different operation instructions are executed by using different control programs integrated on the main control board, and thus the vehicle-mounted refrigerator are controlled through multiple functions.

Further, when different control functions are performed on the vehicle-mounted refrigerator, the display panel may obtain feedback states corresponding to different control functions: the lighting state, the door body state and the temperature state, and visually display each of the states to the user of the vehicle-mounted refrigerator.

### BRIEF DESCRIPTION OF THE DRAWINGS

In order to explain technical solutions in the disclosure or the related art more clearly, drawings required to be used in descriptions of embodiments or the related art will be briefly introduced below. It is apparent that the drawings in the following descriptions are only embodiments of the disclosure, and other drawings may also be obtained by those of ordinary skill in the art according to these drawings, without making creative effort.
FIG. 1 is a flowchart of a method for controlling a vehicle-mounted refrigerator according to an embodiment of the disclosure.
FIG. 2 is a schematic structural diagram of an electronic device according to an embodiment of the disclosure.

### DETAILED DESCRIPTION

In order to make the purpose, technical solutions and advantages of the disclosure more clear, the disclosure will be further described in detail below in combination with specific embodiments and with reference to the drawings.

It should be noted that unless otherwise defined, technical terms or scientific terms used in the embodiments of the disclosure should have usual meanings understood by people with ordinary skills in the field to which the disclosure belongs. "First", "second" and similar words used in the embodiments of the disclosure do not indicate any order, quantity or importance, instead, are only intended to distinguish different components. A word such as "include" or "contain" or the like means that an element or item appearing before the word encompasses elements or items appearing and listed after the word and their equivalents, without excluding other elements or items. A word such as "connect" or "connection" or the like is not limited to physical or mechanical connections, instead, may include electrical connections, whether they are direct or indirect. "up", "down", "left", "right" or the like are only intended to indicate a relative positional relationship. When an absolute position of a described object changes, the relative positional relationship may also change correspondingly.

In the related art, it is still difficult for methods for controlling a vehicle-mounted refrigerator to meet requirements of actual use.

During implementation of the disclosure, the applicant found that main problems of existing methods for controlling a vehicle-mounted refrigerator are that the relevant vehicle-mounted refrigerator has a single function, mainly because a control system related to the vehicle-mounted refrigerator and a control mode of the vehicle-mounted refrigerator are single. Most of vehicle-mounted refrigerators may be controlled to perform cooling only, and control systems thereof do not have capability of controlling other functions, such as visual display, heating, lighting, locking and unlocking a door body, or the like.

Based on this, one or more embodiments in the disclosure provide a method for controlling a vehicle-mounted refrigerator.

The embodiments of the disclosure are described in detail below with reference to the drawings.

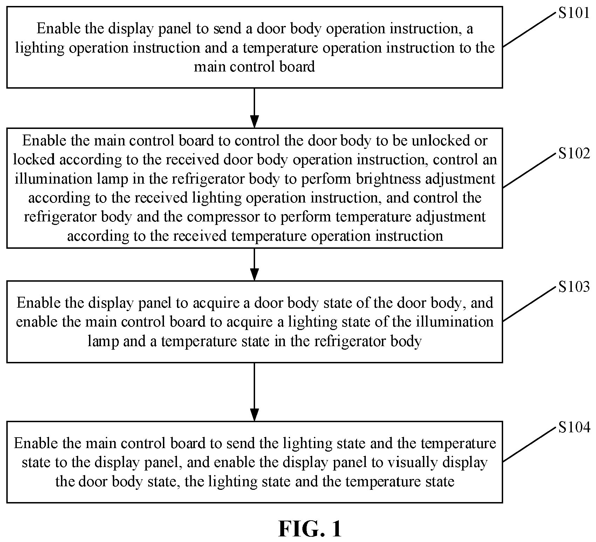

With reference to FIG. 1, a method for controlling a vehicle-mounted refrigerator according to an embodiment of the disclosure includes the following operations S101 to S104.

In operation S101, the display panel is enabled to send a door body operation instruction, a lighting operation instruction and a temperature operation instruction to the main control board.

The vehicle-mounted refrigerator is provided with a main control board, a display panel, a door body, a refrigerator body, a compressor, etc.

In the embodiment of the disclosure, an illumination lamp is provided in the refrigerator body, to illuminate interior of the refrigerator body.

Further, the main control board is provided with a display screen, and the display screen is provided with touch buttons.

The display screen is controlled by a display screen driver preset in the display panel, and the touch buttons are controlled by a button detection module preset in the display panel.

Further, a user using the vehicle-mounted refrigerator may generate various operation instructions for controlling the vehicle-mounted refrigerator, by clicking the touch buttons in the display screen.

Further, the user may generate the door body operation instruction, the lighting operation instruction and the temperature operation instruction by operating the touch buttons.

In the embodiment of the disclosure, after any of the above instructions is generated, the display panel may send the generated instruction to the main control board, to enable the main control board to perform corresponding control according to the instruction.

Further, the door body operation instruction may specifically include an unlocking instruction and a locking instruction.

It may be seen that it is apparent that it is impossible for the door body to be in a locked state and an unlocked state simultaneously. Therefore, the user cannot input the unlocking instruction and the locking instruction simultaneously, and the main control board cannot perform the above two instructions simultaneously, either.

Further, when the door body is in the locked state, the user may input the unlocking instruction through the display screen, while cannot input the locking instruction; when the door body is in the unlocked state, the user may input the locking instruction through the display screen, while cannot input the unlocking instruction.

In the embodiment of the disclosure, the lighting operation instruction may specifically include a lamp-on instruction, a lamp-off instruction, and a brightness adjustment instruction.

It may be seen that it is apparent that it is impossible to perform all the above instruction operations on the lighting simultaneously. Therefore, when the illumination lamp is in an on state, the user may input the lamp-off instruction through the display screen, while cannot input the lamp-on instruction; when the illumination lamp is in an off state, the user may input the lamp-on instruction through the display screen, while cannot input the lamp-off instruction; when the lamp is in an on state, the user may also input the brightness adjustment instruction to adjust brightness of the illumination lamp. However, only one of the lamp-on instruction, the lamp-off instruction or the brightness adjustment instruction may be input at the same time, that is, the main control board may perform only one of instructions in the lighting operation instruction at the same time, too.

During the brightness adjustment, the display screen may display multiple brightness in different levels, each of the levels is represented by a respective one of the touch buttons, and the user clicks one of the buttons to generate the brightness adjustment instruction.

In the embodiment of the disclosure, the temperature operation instruction may specifically include a cooling instruction and a heating instruction.

It may be seen that it is apparent that it is impossible to cool and heat the refrigerator body simultaneously. Therefore, the user may input only one of the heating instruction or the cooling instruction at the same time, that is, the main control board may perform only one of instructions in the temperature operation instruction at the same time, too.

In the embodiment of the disclosure, when the user inputs any one of the unlocking instruction, the locking instruction, the lamp-on instruction, the lamp-off instruction, the brightness adjustment instruction, the heating instruction, or the cooling instruction through the touch buttons of the display panel, the display panel may send the instruction to the main control board.

In operation S102, the main control board is enabled to control the door body to be unlocked or locked according to the received door body operation instruction, control an illumination lamp in the refrigerator body to perform brightness adjustment according to the received lighting operation instruction, and control the refrigerator body and the compressor to perform temperature adjustment according to the received temperature operation instruction.

In the embodiment of the disclosure, the main control board is provided with a communication interface. The main control board may receive, through the communication interface, any operation instruction sent by the display panel to the main control board based on the foregoing operations, and perform corresponding control according to the instruction.

Further, when the display panel sends the door body operation instruction to the main control board, the main control board receives the door body operation instruction through the communication interface, and distinguishes the unlocking instruction and the locking instruction.

The main control board is also provided with a motor driver, and the motor driver may be a pre-edited driver program.

Further, the door body is also provided with a motor, and the motor is electrically connected to the motor driver and may be controlled by the motor driver.

Further, the main control board sends the received unlocking instruction or locking instruction to the motor driver, and the motor driver may execute a corresponding unlocking program or locking program according to the unlocking instruction or the locking instruction.

Further, by enabling the motor driver to execute the unlocking program, the motor on the door body may be controlled to be started, and the door body may be driven to be unlocked; when the motor driver executes the locking program, the motor on the door body may be controlled to be started, and the door body may be driven to be locked.

Further, after driving the door body to be unlocked, the motor on the door body also controls movement of the door body, to spring open the door body by a certain distance.

In the embodiment of the disclosure, when the display panel sends the lighting operation instruction to the main control board, the main control board receives the door body operation instruction through the communication interface, and distinguishes the lamp-on instruction, the lamp-off instruction and the brightness adjustment instruction.

The main control board is also provided with a lighting driver, and the lighting driver may be a pre-edited driver program. In the embodiment of the disclosure, the illumination lamp in the refrigerator body may be a Light Emitting Diode (LED) lamp, and when the illumination lamp is a LED lamp, the lighting driver may be an LED driver. The illumination lamp is electrically connected to the lighting driver and may be controlled by the lighting driver.

Further, the main control board sends the received lamp-on instruction, lamp-off instruction or brightness adjustment instruction to the lighting driver, and the lighting driver may execute a corresponding lamp-on program, lamp-off program or brightness adjustment program according to the lamp-on instruction, the lamp-off instruction or the brightness adjustment instruction.

Further, by enabling the lighting driver to execute the lamp-on program, the lamp-off program or the brightness adjustment program, a digital analog signal input to the illumination lamp may be adjusted, thereby controlling to turn on or turn off the illumination lamp or perform the brightness adjustment on the illumination lamp in the refrigerator body.

In the embodiment of the disclosure, when the display panel sends the temperature operation instruction to the main control board, the main control board receives the temperature operation instruction through the communication interface, and distinguishes the heating instruction and the cooling instruction.

The main control board is also provided with a heating control program, and the refrigerator body is also provided with a heating element, for example, the heating element may be a heating wire and a heating film. The heating element is electrically connected to the heating control program, and may be controlled through the heating control program.

Further, when the main control board receives the heating instruction, the main control board sends the received heating instruction to the heating control program, and the heating control program may adjust current working power of the heating element according to the heating instruction.

Further, by adjusting the power of the heating element, temperature emitted by the heating element may be controlled, thereby heating interior of the refrigerator body.

Further, the compressor in the embodiment of the disclosure is provided with a compressor driver and a fan. The compressor driver is electrically connected to the main control board, and the compressor is physically connected to the refrigerator body.

In the embodiment of the disclosure, when the main control board receives the cooling instruction, the main control board sends the received cooling instruction to the compressor driver, and the compressor driver may run the compressor and the fan on the compressor according to the cooling instruction, to cool interior of the refrigerator body.

In operation S103, the display panel is enabled to acquire a door body state of the door body, and the main control board is enabled to acquire a lighting state of the illumination lamp and a temperature state in the refrigerator body.

In the embodiment of the disclosure, based on the above control of the door body of the vehicle-mounted refrigerator, lighting and temperature in the refrigerator body, in order to make control of the vehicle-mounted refrigerator more accurate and enable the user to acquire the state of the vehicle-mounted refrigerator, it is necessary to acquire a current door body state of the door body, the lighting state of the illumination lamp and the temperature state in the refrigerator body respectively.

In the embodiment of the disclosure, the display panel is also provided with a Hall sensor, the door body is also provided with a magnet, and a magnetic value of the magnet may be detected by the Hall sensor.

It may be seen that a distance between the door body and the display panel is different from each other when the door body is in the locked state and when the door body is in the unlocked state. Therefore, in the above two states, magnetic values that may be detected by the Hall sensor are different. Therefore, it may be determined, according to the magnetic value detected by the Hall sensor on the display panel, whether the door body is in the unlocked state or the locked state.

In the embodiment of the disclosure, based on the brightness adjustment of the illumination lamp performed by the main control board in the foregoing operations, after the lighting driver of the main control board sends a digital analog signal, a lighting feedback signal of the illumination lamp may also be collected, and it is determined, according to the lighting feedback signal, whether the illumination lamp is in an off state or an on state at present. Further, the main control board may determine a current brightness, that is, a current brightness level, according to the feedback signal when the illumination lamp is in the on state.

In the embodiment of the disclosure, the refrigerator body is also provided with a temperature sensor, to monitor temperature in the refrigerator body. The temperature sensor may be two Negative Temperature Coefficient (NTC) thermistors, which are arranged separately and are a heating-NTC (heating monitoring thermistor) and a cooling-NTC (cooling monitoring thermistor) respectively.

Further, the main control board is also provided with a temperature detection module, and the temperature detection module may be a pre-edited program.

The heating-NTC is electrically connected to the temperature detection module, the temperature detection module may receive temperature during heating from the heating-NTC and use the temperature as a temperature state of current heating in the refrigerator body.

Further, the cooling-NTC is electrically connected to the compressor driver, and the compressor driver may receive temperature during cooling from the cooling-NTC.

Further, the temperature during cooling will be sent to the main control board, and the main control board may use the temperature information as a temperature state of current cooling in the refrigerator body.

In operation S104, the main control board is enabled to send the lighting state and the temperature state to the display panel, and the display panel is enabled to visually display the door body state, the lighting state and the temperature state.

In the embodiment of the disclosure, based on the above-acquired door body state, lighting state and temperature state, the display panel may visually display them to the user.

In the embodiment of the disclosure, the main control board may send the acquired lighting state and temperature state to the display panel through the communication interface of the main control board.

Further, the display panel stores the acquired door body state, lighting state and temperature state in the display screen driver, and enables the display screen driver to visually display them in the display screen, to enable the user to clearly view current various states of the vehicle-mounted refrigerator.

It may be seen that according to the method for controlling a vehicle-mounted refrigerator in the embodiment of the disclosure, the main control board is enabled to control the door body, lighting and temperature based on the door body operation instruction, the lighting operation instruction and the temperature operation instruction sent by the display panel, which comprehensively considers the control logic of the main control board after multiple different functions are added: the main control board may control the door body based on the door body operation instruction, the main control board may control the illumination lamp based on the lighting operation instruction, the main control board may control the refrigerator body and the compressor based on the temperature operation instruction. It may be seen that according to the method, different operation instructions are executed by using different control programs integrated on the main control board, and thus the vehicle-mounted refrigerator are controlled through multiple functions.

Further, when different control functions are performed on the vehicle-mounted refrigerator, the display panel may obtain feedback states corresponding to different control functions: the lighting state, the door body state and the temperature state, and visually display each of the states to the user of the vehicle-mounted refrigerator.

It should be noted that the method of the embodiment of the disclosure may be performed by a single device, such as a computer or server, etc. The method of the embodiment may also be applied in a distributed scenario, and is completed by multiple devices cooperating with each other. In case of the distributed scenario, one of multiple devices may perform only one or more operations in the method of the embodiment of the disclosure, and multiple devices may interact with each other to complete the method.

It should be noted that some embodiments of the disclosure have been described as above. Other embodiments fall within the scope of the appended claims. In some cases, actions or operations recited in the claims may be performed in an order different from that in the above embodiments, and may still achieve desired results. Furthermore, processes depicted in the drawings do not necessarily require the specific order or consecutive order as illustrated, to achieve desirable results. In some implementations, multitask processing and parallel processing are also possible or may be advantageous.

Based on the same inventive concept, corresponding to the method of any of the above embodiments, an embodiment of the disclosure further provides a system for controlling a vehicle-mounted refrigerator.

The system for controlling a vehicle-mounted refrigerator performs the method described in any of the foregoing embodiments.

The system for controlling a vehicle-mounted refrigerator includes a main control board, and a display panel, a door body, a refrigerator body and a compressor which are connected to the main control board.

The main control board is configured to: control the door body to be unlocked or locked according to the received door body operation instruction, control an illumination lamp in the refrigerator body to perform brightness adjustment according to the received lighting operation instruction, and control the refrigerator body and the compressor to perform temperature adjustment according to the received temperature operation instruction; acquire a lighting state of the illumination lamp and a temperature state in the refrigerator body; and
send the lighting state and the temperature state to the display panel.

The display panel is configured to: send a door body operation instruction, a lighting operation instruction and a temperature operation instruction to the main control board;
acquire a door body state of the door body; and
visually display the door body state and the temperature state.

The door body is configured to: enable the main control board to receive the door body operation instruction through a preset communication interface, and execute a preset motor driver according to the door body operation instruction;
run a motor preset on the door body, in response to an execution of the motor driver; and
control a movement of the door body by running the motor.

In other embodiments of the disclosure, the motor includes:
the motor being fixedly arranged on the door body and being electrically connected to the motor driver in the main control board.

For the convenience of descriptions, when the above apparatus is described, the above apparatus is divided into various modules based on their functions, and the modules are described respectively. Of course, when the embodiments of the disclosure are implemented, the functions of the modules may be implemented in the same or multiple software and/or hardware.

The apparatus of the above embodiment is configured to implement the corresponding method for controlling a vehicle-mounted refrigerator in any of the foregoing embodiments, and have advantageous effects of corresponding method embodiments, which are not elaborated here.

Based on the same inventive concept, corresponding to the method of any of the above embodiments, an embodiment of the disclosure further provides an electronic device, the electronic device includes a memory, a processor, and a computer program stored on the memory and executable on the processor, and when the processor executes the program, the method for controlling a vehicle-mounted refrigerator as described in any of the above embodiments is implemented.

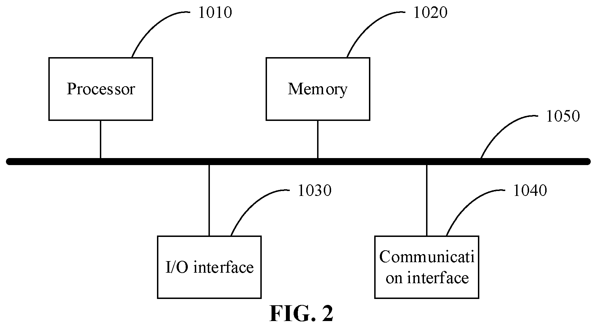

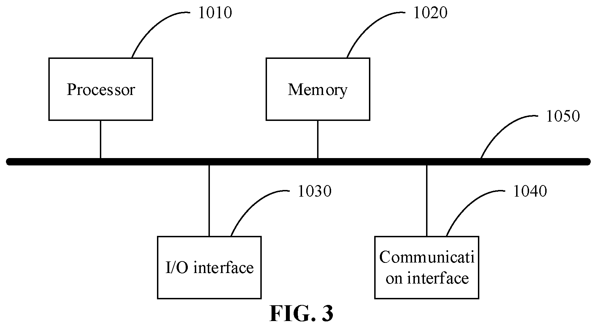

FIG. 2 illustrates a schematic diagram of a more specific hardware structure of an electronic device provided in the embodiment. The device may include a processor 1010, a memory 1020, an input/output (I/O) interface 1030, a communication interface 1040, and a bus 1050. The processor 1010, the memory 1020, the I/O interface 1030 and the communication interface 1040 implement mutual communication and connection within the device through the bus 1050.

The processor 1010 may be implemented in form of a general-purpose Central Processing Unit (CPU), a microprocessor, an Application Specific Integrated Circuit (ASIC), or one or more Integrated Circuits (ICs), or other forms, and is configured to perform relevant programs to implement the technical solutions provided in the embodiments of the disclosure.

The memory 1020 may be implemented in form of a Read Only Memory (ROM), a Random Access Memory (RAM), a static storage device, a dynamic storage device, etc. The memory 1020 may store an operating system and other application programs. When the technical solutions provided in the embodiments of the disclosure are implemented through software or firmware, relevant program codes are stored in the memory 1020 and are called and executed by the processor 1010.

The I/O interface 1030 is configured to connect an I/O module to implement information input and output. The I/O module may be configured in the device as a component (not illustrated in the figure), or may be externally connected to the device to provide corresponding functions. Input devices may include a keyboard, a mice, a touch screen, a microphone, various sensors, or the like, and output devices may include a display, a speaker, a vibrator, an indicator lamp, etc.

The communication interface 1040 is configured to connect a communication module (not illustrated in the figure) to implement communication and interaction between this device and other devices. The communication module may implement communication in a wired way (such as a Universal Serial Bus (USB), a network cable, etc.) or in a wireless way (such as a mobile network, Wireless Fidelity (WIFI), Bluetooth, etc.).

The bus 1050 includes a path which transmits information between various components of the device (such as the processor 1010, the memory 1020, the I/O interface 1030, and the communication interface 1040).

It should be noted that the above device only illustrates the processor 1010, the memory 1020, the I/O interface 1030, the communication interface 1040 and the bus 1050; however, during specific implementation, the device may further include other components necessary to implement normal operation. Furthermore, it may be understood by those skilled in the art that the above device may also include only components necessary to implement the solutions of the embodiments of the disclosure, and does not necessarily include all components illustrated in the figure.

The apparatus of the above embodiment is configured to implement the corresponding method for controlling a vehicle-mounted refrigerator in any of the foregoing embodiments, and have advantageous effects of corresponding method embodiments, which are not elaborated here.

Based on the same inventive concept, corresponding to the method of any of the above embodiments, an embodiment of the disclosure further provides a vehicle, the vehicle includes a system for controlling a vehicle-mounted refrigerator, and an electronic device, and the electronic device performs the method for controlling a vehicle-mounted refrigerator as described in any one of the above paragraphs.

Based on the same inventive concept, corresponding to the method of any of the above embodiments, an embodiment of the disclosure further provides a non-transitory computer-readable storage medium, the non-transitory computer-readable storage medium stores computer instructions, and the computer instructions are configured to enable a computer to perform the method for controlling a vehicle-mounted refrigerator as described in any of the above embodiments.

The computer-readable medium in the embodiment of the disclosure includes permanent and non-permanent, mobile and non-mobile media, and information storage may be implemented by any method or technology. The information may be computer-readable instructions, data structures, program modules, or other data. Examples of the storage medium of the computer include, but are not limited to a Phase change RAM (PRAM), a Static RAM (SRAM), a Dynamic RAM (DRAM), other types of RAMs, a ROM, an Electrically Erasable Programmable ROM (EEPROM), a flash memory or other memory technologies, a Compact Disc-Read Only Memory (CD-ROM), a Digital Versatile Disc (DVD) or other optical storage, a magnetic tape cassette, a tape disk storage or other magnetic storage devices, or any other non-transmission media, which may be configured to store information that may be accessed by a computing device.

The computer instructions stored in the storage medium of the above embodiment are configured to enable the computer to perform the method for controlling a vehicle-mounted refrigerator as described in any of the above embodiments, and have advantageous effects of corresponding method embodiments, which are not elaborated here.

## Claims

1. A method for controlling a vehicle-mounted refrigerator, applied to the vehicle-mounted refrigerator, wherein the vehicle-mounted refrigerator comprises a main control board, a display panel, a door body, a refrigerator body, and a compressor,
the method comprising:
enabling (S101) the display panel to send a door body operation instruction, a lighting operation instruction and a temperature operation instruction to the main control board;
enabling (S102) the main control board to control the door body to be unlocked or locked according to the received door body operation instruction, control an illumination lamp in the refrigerator body to perform brightness adjustment according to the received lighting operation instruction, and control the refrigerator body and the compressor to perform temperature adjustment according to the received temperature operation instruction;
enabling (S103) the display panel to acquire a door body state of the door body, and enabling (S103) the main control board to acquire a lighting state of the illumination lamp and a temperature state in the refrigerator body; and
enabling (S104) the main control board to send the lighting state and the temperature state to the display panel, and enabling (S104) the display panel to visually display the door body state, the lighting state and the temperature state,
wherein enabling (S102) the main control board to control the door body to be unlocked according to the received door body operation instruction comprises:
enabling the main control board to receive the door body operation instruction through a preset communication interface, and execute a preset motor driver according to the door body operation instruction;
running a motor preset on the door body, in response to an execution of the motor driver; and
controlling the door body to be sprung open by a certain distance.

2. The method of claim 1, wherein enabling (S101) the display panel to send the door body operation instruction, the lighting operation instruction and the temperature operation instruction to the main control board comprises:
enabling the display panel to send one of an unlocking instruction or a locking instruction to the main control board;
enabling the display panel to send one of a lamp-on instruction, a lamp-off instruction or a brightness adjustment instruction to the main control board; and
enabling the display panel to send one of a heating instruction or a cooling instruction to the main control board.

3. The method of claim 2, wherein the main control board is provided with a display screen, the display screen is provided with touch buttons, the display screen is controlled by a display screen driver preset in the display panel, and the touch buttons are controlled by a button detection module preset in the display panel.

4. The method of claim 3, wherein during the brightness adjustment, the display screen displays a plurality of brightness in different levels, each of the levels is represented by a respective one of the touch buttons, and a user clicks one of the touch buttons to generate the brightness adjustment instruction.

5. The method of any one of claims 1 to 4, wherein enabling (S102) the main control board to control the door body to be locked according to the received door body operation instruction comprises:
enabling the main control board to receive the door body operation instruction through a preset communication interface, and execute a preset motor driver according to the door body operation instruction;
running a motor preset on the door body, in response to an execution of the motor driver; and
controlling a movement of the door body by running the motor.

6. The method of any one of claims 1 to 5, wherein controlling (S102) the illumination lamp in the refrigerator body to perform brightness adjustment according to the received lighting operation instruction comprises:
enabling the main control board to receive the lighting operation instruction through a preset communication interface, and execute a preset lighting driver according to the lighting operation instruction; and
controlling the illumination lamp, in response to an execution of the light driver.

7. The method of any one of claims 2 to 6, wherein controlling (S102) the refrigerator body and the compressor to perform temperature adjustment according to the received temperature operation instruction comprises:
in response to the main control board having received the heating instruction through a preset communication interface, executing a preset heating control program according to the heating instruction;
adjusting power of a heating element preset on the refrigerator body, in response to an execution of the heating control program; and
performing, by the heating element, heating according to the adjusted power, or
in response to the main control board having received the cooling instruction through the preset communication interface, executing a preset cooling control program according to the cooling instruction;
executing a compressor driver preset on the compressor, in response to an execution of the cooling control program;
running the compressor, in response to an execution of the compressor driver; and
performing cooling in the refrigerator body, in response to a running of the compressor.

8. The method of claim 7, wherein the heating element is a heating wire and a heating film; and/or
the compressor is further provided with a fan.

9. The method of any one of claims 2 to 8, wherein enabling (S103) the display panel to acquire the door body state of the door body, and enabling (S103) the main control board to acquire the lighting state of the illumination lamp and the temperature state in the refrigerator body comprises:
enabling the display panel to detect a magnetic value of a magnet preset on the door body according to a preset Hall sensor;
determining, according to the detected magnetic value, that the door body is in one of an unlocked state or a locked state;
after the main control board controls the illumination lamp to perform brightness adjustment, enabling the main control board to collect a lighting feedback signal sent by the illumination lamp, and determine the lighting state according to the lighting feedback signal; and
enabling the main control board to receive a temperature feedback signal from a temperature sensor preset in the refrigerator body, and determine the temperature state according to the temperature feedback signal,
wherein the temperature sensor comprises a heating monitoring thermistor and a cooling monitoring thermistor.

10. A system for controlling a vehicle-mounted refrigerator, configured to perform the method of any one of claims 1 to 9,
the system comprising a main control board (301), and a display panel (302), a door body (303), a refrigerator body (304) and a compressor (305) which are connected to the main control board (301),
wherein the main control board (301) is configured to: control the door body (303) to be unlocked or locked according to the received door body operation instruction, control an illumination lamp in the refrigerator body (304) to perform brightness adjustment according to the received lighting operation instruction, and control the refrigerator body (304) and the compressor (305) to perform temperature adjustment according to the received temperature operation instruction; acquire a lighting state of the illumination lamp and a temperature state in the refrigerator body (304); and
send the lighting state and the temperature state to the display panel (302),
the display panel (302) is configured to: send a door body operation instruction, a lighting operation instruction and a temperature operation instruction to the main control board (301);
acquire a door body state of the door body (303); and
visually display the door body state and the temperature state,
the door body (303) is configured to: enable the main control board (301) to receive the door body operation instruction through a preset communication interface, and execute a preset motor driver according to the door body operation instruction;
run a motor preset on the door body (303), in response to an execution of the motor driver; and
control a movement of the door body (303) by running the motor,
wherein controlling the door body (303) to be unlocked comprises: controlling the door body (303) to be sprung open by a certain distance.

11. The system of claim 10, wherein the motor comprises:
the motor being fixedly arranged on the door body (303) and being electrically connected to the motor driver in the main control board (301).

12. An electronic device, comprising a memory, a processor, and a computer program stored on the memory and executable by the processor, wherein when the processor executes the computer program, the computer program enables a vehicle-mounted refrigerator to implement the method of any one of claims 1 to 9, the vehicle-mounted refrigerator comprises a main control board, a display panel, a door body, a refrigerator body, and a compressor.

13. A non-transitory computer-readable storage medium, having stored thereon computer instructions, wherein the computer instructions are configured to enable a vehicle-mounted refrigerator to perform the method of any one of claims 1 to 9, the vehicle-mounted refrigerator comprises a main control board, a display panel, a door body, a refrigerator body, and a compressor.

14. A vehicle, comprising the system for controlling a vehicle-mounted refrigerator of claim 10 and the electronic device of claim 12.

## Patentansprüche

1. Verfahren zum Steuern eines fahrzeugmontierten Kühlschranks, das auf den fahrzeugmontierten Kühlschrank angewandt wird, wobei der fahrzeugmontierte Kühlschrank eine Hauptsteuerplatine, ein Anzeigepaneel, einen Türkörper, einen Kühlschrankkörper und einen Kompressor umfasst,
wobei das Verfahren Folgendes umfasst:
Ermöglichen (S101), dass das Anzeigepaneel eine Türkörperbetriebsanweisung, eine Beleuchtungsbetriebsanweisung und eine Temperaturbetriebsanweisung an die Hauptsteuerplatine sendet;
Ermöglichen (S102), dass die Hauptsteuerplatine den Türkörper zum Entriegeln oder Verriegeln gemäß der empfangenen Türkörperbetriebsanweisung steuert, eine Beleuchtungsleuchte im Kühlschrankkörper zum Durchführen einer Helligkeitsanpassung gemäß der empfangenen Beleuchtungsbetriebsanweisung steuert und den Kühlschrankkörper und den Kompressor zum Durchführen einer Temperaturanpassung gemäß der empfangenen Temperaturbetriebsanweisung steuert;
Ermöglichen (S103), dass das Anzeigepaneel einen Türkörperzustand des Türkörpers erfasst, und Ermöglichen (S103), dass die Hauptsteuerplatine einen Beleuchtungszustand der Beleuchtungsleuchte und einen Temperaturzustand des Kühlschrankkörpers erfasst; und
Ermöglichen (S104), dass die Hauptsteuerplatine den Beleuchtungszustand und den Temperaturzustand an das Anzeigepaneel sendet, und Ermöglichen (S104), dass das Anzeigepaneel den Türkörperzustand, den Beleuchtungszustand und den Temperaturzustand visuell anzeigt,
wobei das Ermöglichen (S102), dass die Hauptsteuerplatine den Türkörper zum Entriegeln gemäß der empfangenen Türkörperbetriebsanweisung steuert, Folgendes umfasst:
Ermöglichen, dass die Hauptsteuerplatine die Türkörperbetriebsanweisung über eine voreingestellte Kommunikationsschnittstelle empfängt und einen voreingestellten Motortreiber gemäß der Türkörperbetriebsanweisung ausführt;
Betreiben einer Motorvoreinstellung am Türkörper in Reaktion auf eine Ausführung des Motortreibers; und
Steuern des Türkörpers derart, dass er um einen gewissen Abstand aufspringt.

2. Verfahren nach Anspruch 1, wobei das Ermöglichen (S101), dass das Anzeigepaneel die Türkörperbetriebsanweisung, die Beleuchtungsbetriebsanweisung und die Temperaturbetriebsanweisung an die Hauptsteuerplatine sendet, Folgendes umfasst:
Ermöglichen, dass das Anzeigepaneel eine von einer Entriegelungsanweisung oder einer Verriegelungsanweisung an die Hauptsteuerplatine sendet;
Ermöglichen, dass das Anzeigepaneel eine von einer Leuchte-ein-Anweisung, einer Leuchte-aus-Anweisung oder einer Helligkeitsanpassungsanweisung an die Hauptsteuerplatine sendet; und
Ermöglichen, dass das Anzeigepaneel eine von einer Heizungsanweisung oder einer Kühlungsanweisung an die Hauptsteuerplatine sendet.

3. Verfahren nach Anspruch 2, wobei die Hauptsteuerplatine mit einem Anzeigebildschirm versehen ist, der Anzeigebildschirm mit Berührungstasten versehen ist, der Anzeigebildschirm von einem im Anzeigebildschirm voreingestellten Anzeigebildschirmtreiber gesteuert wird und die Berührungstasten von einem im Anzeigepaneel voreingestellten Tastendetektionsmodul gesteuert werden.

4. Verfahren nach Anspruch 3, wobei der Anzeigebildschirm während der Helligkeitsanpassung eine Vielzahl von Helligkeiten in verschiedenen Stufen anzeigt, jede der Stufen durch eine jeweilige der Berührungstasten repräsentiert ist und ein Benutzer auf eine der Berührungstasten klickt, um die Helligkeitsanpassungsanweisung zu erzeugen.

5. Verfahren nach einem der Ansprüche 1 bis 4, wobei das Ermöglichen (S102), dass die Hauptsteuerplatine den Türkörper zum Verriegeln gemäß der empfangenen Türkörperbetriebsanweisung steuert, Folgendes umfasst:
Ermöglichen, dass die Hauptsteuerplatine die Türkörperbetriebsanweisung über eine voreingestellte Kommunikationsschnittstelle empfängt und einen voreingestellten Motortreiber gemäß der Türkörperbetriebsanweisung ausführt;
Betreiben einer Motorvoreinstellung am Türkörper in Reaktion auf eine Ausführung des Motortreibers; und
Steuern einer Bewegung des Türkörpers durch Betreiben des Motors.

6. Verfahren nach einem der Ansprüche 1 bis 5, wobei das Steuern (S102) der Beleuchtungsleuchte im Kühlschrankkörper zum Durchführen einer Helligkeitsanpassung gemäß der empfangenen Beleuchtungsbetriebsanweisung Folgendes umfasst:
Ermöglichen, dass die Hauptsteuerplatine die Beleuchtungsbetriebsanweisung über eine voreingestellte Kommunikationsschnittstelle empfängt und einen voreingestellten Beleuchtungstreiber gemäß der Beleuchtungsbetriebsanweisung ausführt; und
Steuern der Beleuchtungsleuchte in Reaktion auf eine Ausführung des Beleuchtungstreibers.

7. Verfahren nach einem der Ansprüche 2 bis 6, wobei das Steuern (S102) des Kühlschrankkörpers und des Kompressors zum Durchführen einer Temperaturanpassung gemäß der empfangenen Temperaturbetriebsanweisung Folgendes umfasst:
in Reaktion darauf, dass die Hauptsteuerplatine die Heizungsanweisung über eine voreingestellte Kommunikationsschnittstelle empfangen hat, Ausführen eines voreingestellten Heizungssteuerprogramms gemäß der Heizungsanweisung;
Anpassen einer Leistung eines am Kühlschrankkörper voreingestellten Heizelements in Reaktion auf eine Ausführung des Heizungssteuerprogramms; und
Durchführen einer Heizung durch das Heizelement gemäß der angepassten Leistung, oder
in Reaktion darauf, dass die Hauptsteuerplatine die Kühlungsanweisung über die voreingestellte Kommunikationsschnittstelle empfangen hat, Ausführen eines voreingestellten Kühlungssteuerprogramms gemäß der Kühlungsanweisung;
Ausführen eines am Kompressor voreingestellten Kompressortreibers in Reaktion auf eine Ausführung des Kühlungssteuerprogramms;
Betreiben des Kompressors in Reaktion auf eine Ausführung des Kompressortreibers; und
Durchführen einer Kühlung im Kühlschrankkörper in Reaktion auf das Betreiben des Kompressors.

8. Verfahren nach Anspruch 7, wobei das Heizelement ein Heizdraht oder eine Heizfolie ist; und/oder
der Kompressor ist ferner mit einem Lüfter versehen.

9. Verfahren nach einem der Ansprüche 2 bis 8, wobei das Ermöglichen (S103), dass das Anzeigepaneel den Türkörperzustand des Türkörpers erfasst, und das Ermöglichen (S103), dass die Hauptsteuerplatine den Beleuchtungszustand der Beleuchtungsleuchte und einen Temperaturzustand des Kühlschrankkörpers erfasst, Folgendes umfasst:
Ermöglichen, dass das Anzeigepaneel einen magnetischen Wert eines am Türkörper voreingestellten Magneten gemäß einem voreingestellten Hallsensor anzeigt;
Bestimmen gemäß dem detektierten magnetischen Wert, dass der Türkörper in einem von einem Entriegelungszustand oder einem Verriegelungszustand ist;
nachdem die Hauptsteuerplatine die Beleuchtungsleuchte zum Durchführen einer Helligkeitsanpassung gesteuert hat, Ermöglichen, dass die Hauptsteuerplatine ein Beleuchtungsfeedbacksignal aufnimmt, das von der Beleuchtungsleuchte gesendet wird, und den Beleuchtungszustand gemäß dem Beleuchtungsfeedbacksignal bestimmt; und
Ermöglichen, dass die Hauptsteuerplatine ein Temperaturfeedbacksignal von einem im Kühlschrankkörper voreingestellten Temperatursensor empfängt und den Temperaturzustand gemäß dem Temperaturfeedbacksignal bestimmt,
wobei der Temperatursensor einen Heizungsüberwachungsthermistor und einen Kühlungsüberwachungsthermistor umfasst.

10. System zum Steuern eines fahrzeugmontierten Kühlschranks, das dazu ausgelegt ist, das Verfahren nach einem der Ansprüche 1 bis 9 durchzuführen,
wobei das System eine Hauptsteuerplatine (301) und ein Anzeigepaneel (302), einen Türkörper (303), einen Kühlschrankkörper (304) und einen Kompressor (305) umfasst, die mit der Hauptsteuerplatine (301) verbunden sind,
wobei die Hauptsteuerplatine (301) zu Folgendem ausgelegt ist: Steuern des Türkörpers (303) derart, dass er entriegelt oder gemäß der empfangenen Türkörperbetriebsanweisung verriegelt ist, Steuern einer Beleuchtungsleuchte im Kühlschrankkörper (304) zum Durchführen einer Helligkeitsanpassung gemäß der empfangenen Beleuchtungsbetriebsanweisung und Steuern des Kühlschrankkörpers (304) und des Kompressors (305) zum Durchführen einer Temperaturanpassung gemäß der empfangenen Temperaturbetriebsanweisung; Erfassen eines Beleuchtungszustands der Beleuchtungsleuchte und eines Temperaturzustands im Kühlschrankkörper (304); und
Senden des Beleuchtungszustands und des Temperaturzustands an das Anzeigepaneel (302),
das Anzeigepaneel (302) ist zu Folgendem ausgelegt: Senden einer Türkörperbetriebsanweisung, einer Beleuchtungsbetriebsanweisung und einer Temperaturbetriebsanweisung an die Hauptsteuerplatine (301);
Erfassen eines Türkörperzustands des Türkörpers (303); und
visuelles Anzeigen des Türkörperzustands und des Temperaturzustands,
der Türkörper (303) ist zu Folgendem ausgelegt: Ermöglichen, dass die Hauptsteuerplatine (301) die Türkörperbetriebsanweisung über eine voreingestellte Kommunikationsschnittstelle empfängt und einen voreingestellten Motortreiber gemäß der Türkörperbetriebsanweisung ausführt;
Betreiben eines am Türkörper (303) voreingestellten Motors in Reaktion auf eine Ausführung des Motortreibers; und
Steuern einer Bewegung des Türkörpers (303) durch Betreiben des Motors,
wobei das Steuern des Türkörpers (303) derart, dass er entriegelt ist, Folgendes umfasst: Steuern des Türkörpers (303) derart, dass er um einen gewissen Abstand aufspringt.

11. System nach Anspruch 10, wobei der Motor Folgendes umfasst:
wobei der Motor fest am Türkörper (303) angeordnet und elektrisch mit dem Motortreiber in der Hauptsteuerplatine (301) verbunden ist.

12. Elektronische Vorrichtung, die einen Speicher, einen Prozessor und ein Computerprogramm umfasst, das im Speicher gespeichert und vom Prozessor ausführbar ist, wobei, wenn der Prozessor das Computerprogramm ausführt, das Computerprogramm es einem fahrzeugmontierten Kühlschrank ermöglicht, das Verfahren nach einem der Ansprüche 1 bis 9 zu implementieren, wobei der fahrzeugmontierte Kühlschrank eine Hauptsteuerplatine, ein Anzeigepaneel, einen Türkörper, einen Kühlschrankkörper und einen Kompressor umfasst.

13. Nichttransitorisches computerlesbares Speichermedium, auf dem Computeranweisungen gespeichert sind, wobei die Computeranweisungen dazu ausgelegt sind, es einem fahrzeugmontierten Kühlschrank zu ermöglichen, ein Verfahren nach einem der Ansprüche 1 bis 9 durchzuführen, wobei der fahrzeugmontierte Kühlschrank eine Hauptsteuerplatine, ein Anzeigepaneel, einen Türkörper, einen Kühlschrankkörper und einen Kompressor umfasst.

14. Fahrzeug, das das System zum Steuern eines fahrzeugmontierten Kühlschranks nach Anspruch 10 und die elektronische Vorrichtung nach Anspruch 12 umfasst.

## Revendications

1. Procédé de commande d'un réfrigérateur embarqué, appliqué audit réfrigérateur embarqué, dans lequel le réfrigérateur embarqué comprend une carte de commande principale, un panneau d'affichage, un corps de porte, un corps de réfrigérateur et un compresseur,
le procédé comprenant :
l'activation (S101) du panneau d'affichage pour qu'il envoie une instruction de fonctionnement du corps de porte, une instruction de fonctionnement de l'éclairage et une instruction de fonctionnement de la température à la carte de commande principale ;
permettre (S102) à la carte de commande principale de commander le corps de porte pour qu'il soit déverrouillé ou verrouillé conformément à l'instruction de fonctionnement du corps de porte reçue, de commander une lampe d'éclairage dans le corps du réfrigérateur pour effectuer un réglage de la luminosité conformément à l'instruction de fonctionnement de l'éclairage reçue, et de commander le corps du réfrigérateur et le compresseur pour effectuer un réglage de la température conformément à l'instruction de fonctionnement de la température reçue ;
permettre (S103) au panneau d'affichage d'acquérir un état du corps de porte, et permettre (S103) à la carte de commande principale d'acquérir un état d'éclairage de la lampe d'éclairage et un état de température à l'intérieur du réfrigérateur ; et
permettre (S104) à la carte de commande principale d'envoyer l'état d'éclairage et l'état de température au panneau d'affichage, et permettre (S104) au panneau d'affichage d'afficher visuellement l'état du corps de porte, l'état d'éclairage et l'état de température,
dans lequel permettre (S102) à la carte de commande principale de commander le déverrouillage du corps de porte conformément à l'instruction de fonctionnement du corps de porte reçue comprend :
permettre à la carte de commande principale de recevoir l'instruction de fonctionnement du corps de porte via une interface de communication prédéfinie, et d'exécuter un pilote de moteur prédéfini conformément à l'instruction de fonctionnement du corps de porte ;
l'exécution d'un moteur prédéfini sur le corps de porte, en réponse à l'exécution du pilote de moteur ; et
commander le corps de porte pour qu'il s'ouvre d'une certaine distance.

2. Procédé selon la revendication 1, dans lequel le fait de permettre (S101) au panneau d'affichage d'envoyer l'instruction de fonctionnement du corps de porte, l'instruction de fonctionnement de l'éclairage et l'instruction de fonctionnement de la température à la carte de commande principale comprend :
permettre au panneau d'affichage d'envoyer à la carte de commande principale soit une instruction de déverrouillage, soit une instruction de verrouillage ;
permettre au panneau d'affichage d'envoyer à la carte de commande principale soit une instruction d'allumage, soit une instruction d'extinction, soit une instruction de réglage de la luminosité ; et
permettre au panneau d'affichage d'envoyer à la carte de commande principale soit une instruction de chauffage, soit une instruction de refroidissement.

3. Procédé selon la revendication 2, dans lequel la carte de commande principale est équipée d'un écran d'affichage, l'écran d'affichage est muni de boutons tactiles, l'écran d'affichage est commandé par un pilote d'écran d'affichage préconfiguré dans le panneau d'affichage, et les boutons tactiles sont commandés par un module de détection de boutons préconfiguré dans le panneau d'affichage.

4. Procédé selon la revendication 3, dans lequel, pendant le réglage de la luminosité, l'écran d'affichage affiche plusieurs niveaux de luminosité différents, chacun de ces niveaux étant représenté par l'un des boutons tactiles, et un utilisateur clique sur l'un des boutons tactiles pour générer l'instruction de réglage de la luminosité.

5. Procédé selon l'une quelconque des revendications 1 à 4, dans lequel le fait de permettre (S102) à la carte de commande principale de commander le verrouillage du corps de porte conformément à l'instruction de fonctionnement du corps de porte reçue comprend :
permettre à la carte de commande principale de recevoir l'instruction de fonctionnement du corps de porte par l'intermédiaire d'une interface de communication prédéfinie, et d'exécuter un pilote de moteur prédéfini conformément à l'instruction de fonctionnement du corps de porte ;
faire fonctionner un moteur prédéfini sur le corps de porte, en réponse à l'exécution du pilote de moteur ; et
commander un mouvement du corps de porte en faisant fonctionner le moteur.

6. Procédé selon l'une quelconque des revendications 1 à 5, dans lequel le fait de commander (S102) la lampe d'éclairage dans le corps du réfrigérateur pour effectuer un réglage de la luminosité conformément à l'instruction de fonctionnement d'éclairage reçue comprend :
permettre à la carte de commande principale de recevoir l'instruction de fonctionnement de l'éclairage via une interface de communication prédéfinie, et d'exécuter un pilote d'éclairage prédéfini conformément à ladite instruction de fonctionnement de l'éclairage ; et
commander la lampe d'éclairage, en réponse à l'exécution du pilote d'éclairage.

7. Procédé selon l'une quelconque des revendications 2 à 6, dans lequel la commande (S102) du corps du réfrigérateur et du compresseur pour effectuer un réglage de température conformément à l'instruction de fonctionnement de température reçue comprend :
en réponse à la réception par la carte de commande principale de l'instruction de chauffage via une interface de communication prédéfinie, l'exécution d'un programme de commande de chauffage prédéfini conformément à l'instruction de chauffage ;
le réglage de la puissance d'un élément chauffant prédéfini sur le corps du réfrigérateur, en réponse à l'exécution du programme de commande de chauffage ; et
effectuer, à l'aide de l'élément chauffant, un chauffage en fonction de la puissance ajustée, ou
en réponse à la réception par la carte de commande principale de l'instruction de refroidissement via l'interface de communication prédéfinie, l'exécution d'un programme de commande de refroidissement prédéfini conformément à l'instruction de refroidissement ;
exécuter un pilote de compresseur prédéfini sur le compresseur, en réponse à l'exécution du programme de commande de refroidissement ;
faire fonctionner le compresseur, en réponse à l'exécution du pilote de compresseur ; et
effectuer un refroidissement à l'intérieur du corps du réfrigérateur, en réponse au fonctionnement du compresseur.

8. Procédé selon la revendication 7, dans lequel l'élément chauffant est constitué d'un fil chauffant et d'un film chauffant ; et/ou
le compresseur est en outre muni d'un ventilateur.

9. Procédé selon l'une quelconque des revendications 2 à 8, dans lequel le fait de permettre (S103) au panneau d'affichage d'acquérir l'état du corps de porte, et le fait de permettre (S103) à la carte de commande principale d'acquérir l'état d'allumage de la lampe d'éclairage et l'état de température à l'intérieur du réfrigérateur comprennent :
le fait de permettre au panneau d'affichage de détecter une valeur magnétique d'un aimant préinstallé sur le corps de porte à l'aide d'un capteur à effet Hall prédéfini ;
déterminer, en fonction de la valeur magnétique détectée, si le corps de porte se trouve dans un état déverrouillé ou dans un état verrouillé ;
après que la carte de commande principale a commandé la lampe d'éclairage pour effectuer un réglage de la luminosité par, permettre à la carte de commande principale de collecter un signal de retour d'éclairage envoyé par la lampe d'éclairage, et de déterminer l'état d'éclairage en fonction du signal de retour d'éclairage ; et
permettre à la carte de commande principale de recevoir un signal de rétroaction de température provenant d'un capteur de température préinstallé dans le corps du réfrigérateur, et de déterminer l'état de température en fonction du signal de rétroaction de température,
dans lequel le capteur de température comprend une thermistance de surveillance du chauffage et une thermistance de surveillance du refroidissement.

10. Système de commande d'un réfrigérateur embarqué dans un véhicule, configuré pour mettre en œuvre le procédé selon l'une quelconque des revendications 1 à 9,
le système comprenant une carte de commande principale (301), ainsi qu'un panneau d'affichage (302), un corps de porte (303), un corps de réfrigérateur (304) et un compresseur (305) qui sont connectés à la carte de commande principale (301),
dans lequel la carte de commande principale (301) est configurée pour : commander le corps de porte (303) afin qu'il soit déverrouillé ou verrouillé en fonction de l'instruction de fonctionnement du corps de porte reçue, commander une lampe d'éclairage dans le corps du réfrigérateur (304) afin d'effectuer un réglage de la luminosité en fonction de l'instruction de fonctionnement de l'éclairage reçue, et commander le corps du réfrigérateur (304) et le compresseur (305) de manière à effectuer un réglage de la température en fonction de l'instruction de fonctionnement relative à la température reçue ; acquérir un état d'éclairage de la lampe d'éclairage et un état de température à l'intérieur du corps du réfrigérateur (304) ; et
transmettre l'état d'éclairage et l'état de température au panneau d'affichage (302),
le panneau d'affichage (302) est configuré pour : envoyer une instruction de fonctionnement de la porte, une instruction de fonctionnement de l'éclairage et une instruction de fonctionnement de la température à la carte de commande principale (301) ;
détecter l'état de la porte (303) ; et
afficher visuellement l'état de la porte et l'état de température,
le corps de porte (303) est configuré pour : permettre à la carte de commande principale (301) de recevoir l'instruction de fonctionnement du corps de porte via une interface de communication prédéfinie, et exécuter un pilote de moteur prédéfini conformément à l'instruction de fonctionnement du corps de porte ;
faire fonctionner un moteur prédéfini sur le corps de porte (303), en réponse à l'exécution du programme de commande du moteur ; et
commander un mouvement du corps de porte (303) en faisant fonctionner le moteur, dans lequel le fait de commander le corps de porte (303) pour qu'il soit déverrouillé comprend : le fait de commander le corps de porte (303) pour qu'il s'ouvre par ressort sur une certaine distance.

11. Système selon la revendication 10, dans lequel le moteur comprend :
le moteur étant monté de manière fixe sur le corps de porte (303) et étant connecté électriquement au circuit d'attaque du moteur dans la carte de commande principale (301).

12. Dispositif électronique, comprenant une mémoire, un processeur et un programme informatique stocké dans la mémoire et exécutable par le processeur, dans lequel, lorsque le processeur exécute le programme informatique, ce dernier permet à un réfrigérateur embarqué de mettre en œuvre le procédé selon l'une quelconque des revendications 1 à 9, le réfrigérateur embarqué comprenant une carte de commande principale, un panneau d'affichage, un corps de porte, un corps de réfrigérateur et un compresseur.

13. Support de stockage non éphémère lisible par ordinateur, sur lequel sont stockées des instructions informatiques, dans lequel lesdites instructions informatiques sont configurées pour permettre à un réfrigérateur embarqué de mettre en œuvre le procédé selon l'une quelconque des revendications 1 à 9, le réfrigérateur embarqué comprenant une carte de commande principale, un panneau d'affichage, un corps de porte, un corps de réfrigérateur et un compresseur.

14. Véhicule comprenant le système de commande d'un réfrigérateur embarqué selon la revendication 10 et le dispositif électronique selon la revendication 12.
